# FASCICULE DE BREVET EUROPEEN

(11) **EP 3 077 275 B1**
(45) Date de publication et mention de la délivrance du brevet: **04.07.2018**
(21) Numéro de dépôt: 14803138.8
(22) Date de dépôt: 27.11.2014
(51) Int. Cl.: B62D 25/20

(54) **STRUCTURE DE LA PARTIE ARRIÈRE DE LA CAISSE D'UN VÉHICULE AUTOMOBILE DONT LES LONGERONNETS COMPORTENT UNE ALLONGE**
HECKSTRUKTUR EINER KRAFTFAHRZEUGKAROSSERIE MIT SPARREN MIT EINER VERLÄNGERUNG
STRUCTURE OF THE REAR PART OF A MOTOR VEHICLE BODY OF WHICH THE SPARS COMPRISE AN EXTENSION

(30) Priorité: 02.12.2013 FR 1361940
(43) Date de publication de la demande: 12.10.2016
(73) Titulaire: PSA Automobiles SA, 78300 Poissy (FR)
(72) Inventeur: LEFEVRE, Eric, 91470 Limours (FR); TAILLEVENT, Christophe, 77220 Tournan en Brie (FR)
(74) Mandataire: Fosse, Danièle
(86) Numéro de dépôt international: PCT/EP2014/075806
(87) Numéro de publication internationale: WO 2015/082301

(56) Documents cités:
- EP-A2- 1 657 141
- WO-A1-2012/001932
- DE-A1-102011 115 586
- DE-U1- 29 504 026
- US-A1- 2006 061 142

## Description

La présente invention concerne la structure de la partie arrière de la caisse d'un véhicule automobile comprenant un plancher de charge fixé entre deux longeronnets en tôle et un panneau arrière s'étendant transversalement entre les deux extrémités arrières respectives des deux longeronnets.

Pour limiter le nombre de pièces distinctes de la caisse d'un véhicule automobile, on a utilisé pour réaliser la structure arrière de la caisse, deux longeronnets dont la destination première est d'équiper l'avant de la caisse d'un véhicule automobile.

Cependant, les longeronnets destinés à l'avant de la caisse sont plus courts que ceux de la structure arrière de la caisse.

Ainsi, après montage de ces longeronnets, il subsiste un intervalle entre l'arrière de chacun d'eux et le panneau arrière de la caisse.

Pour combler cet intervalle, on a utilisé plusieurs pièces distinctes dont l'une a pour fonction d'allonger le longeronnet et l'autre pour fonction de renforcer la liaison entre le longeronnet et le panneau arrière.

Une troisième pièce a été utilisée pour suspendre l'échappement du véhicule.

Le fait d'allonger le longeronnet par plusieurs pièces distinctes complique le montage et augmente les coûts. Le document US2006/0061142-A1, en décrivant des éléments de liaison 23 entre des profilés linaires arrières 22 et un panneau arrière 33, divulgue le préambule de la revendication 1. Le but de la présente invention est de remédier à ces inconvénients.

Ce but est atteint, selon l'invention, grâce à une structure de la partie arrière de la caisse d'un véhicule automobile comprenant un plancher de charge fixé entre deux longeronnets en tôle et un panneau arrière s'étendant transversalement entre les deux extrémités arrières respectives des deux longeronnets, ce panneau arrière étant distant de chacune des deux extrémités arrières des deux longeronnets, caractérisée en ce que l'intervalle existant entre chacun des deux longeronnets et le panneau arrière est comblé par une pièce unique comportant deux parties dont l'une a pour fonction d'allonger le longeronnet et l'autre pour fonction de renforcer la liaison entre le longeronnet et le panneau arrière.

Cette pièce unique présente ainsi une double fonction, à savoir une fonction de rallonge et une fonction de renfort.

Une telle pièce unique est moins coûteuse à fabriquer et à monter.

Dans une version préférée de l'invention, la partie de ladite pièce unique ayant pour fonction de renfort de la liaison entre le longeronnet et le panneau arrière a la forme d'une équerre.

Dans un mode de réalisation particulièrement avantageux de l'invention, ladite pièce unique a une section transversale en forme de U, les deux ailes du U étant disposées sensiblement dans le plan des deux faces latérales du longeronnet, l'une des deux ailes du U étant plus haute que l'autre aile pour constituer ladite partie en forme d'équerre.

La partie pliée en U a pour fonction d'allonger le longeronnet et l'aile plus haute du U, la fonction d'équerre pour renforcer la liaison.

Cette pièce peut être réalisée en une seule opération d'emboutissage.

Dans un autre mode de réalisation avantageux de l'invention, les deux ailes du U de ladite pièce sont verticales et le fond du U porte une tige de suspension de l'échappement.

Ainsi, la pièce unique présente une troisième fonction, à savoir la fonction de support pour une tige de suspension de l'échappement.

Selon d'autres particularités avantageuses de l'invention :
- le bord avant de l'aile du U qui est la plus haute est incliné vers le bas entre le panneau arrière et le bord supérieur du longeronnet ;
- chacune des deux ailes du U formé par ladite pièce comporte au moins une nervure emboutie ;
- l'ouverture supérieure de chaque longeronnet et de chacune des deux pièces de section en U soudées à l'arrière d'un longeronnet est fermée par une plaque en tôle commune au longeronnet et à ladite pièce et soudée à ceux-ci ;
- le bord arrière de chacune desdites pièces de section en U est recouvert par une platine ajourée sur laquelle est fixée le panneau arrière ;
- chacune desdites pièces de section en U est en tôle d'acier d'épaisseur comprise entre 2 et 3 mm ;
- chacun desdits longeronnets est un longeronnet existant dont la destination première est d'équiper l'avant d'un véhicule automobile.

D'autres particularités et avantages de l'invention apparaîtront encore tout au long de la description ci-après.

Aux dessins annexés, donnés à titre d'exemples, non limitatifs :
- la figure 1 est une vue éclatée d'une structure arrière de la caisse d'un véhicule automobile, selon l'invention,
- la figure 2 est une vue à échelle agrandie de la pièce d'allonge et de renfort de la structure arrière, selon l'invention,
- la figure 3 est une vue en perspective montrant la pièce, représentée sur la figure 2, montée entre le longeronnet et le panneau arrière de la structure arrière selon l'invention.

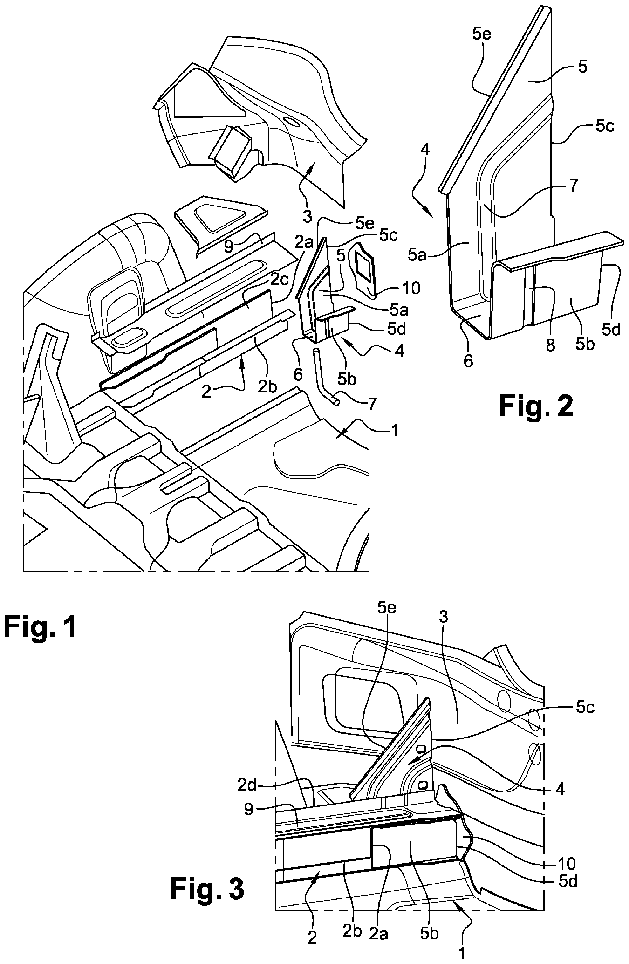

La figure 1 représente de façon éclatée une structure de la partie arrière de la caisse d'un véhicule automobile.

Cette structure comprend un plancher de charge 1 fixé entre deux longeronnets en tôle 2 (dont un seul est visible) et un panneau arrière 3 s'étendant transversalement entre les deux extrémités arrières 2a respectives des deux longeronnets 2.

Après montage (voir figure 3), le panneau arrière 3 est distant de chacune des deux extrémités arrières 2a des deux longeronnets 2.

Conformément à l'invention, l'intervalle existant entre chacun des deux longeronnets 2 et le panneau arrière 3 est comblé par une pièce unique 4 comportant deux parties dont l'une a pour fonction d'allonger le longeronnet 2 et l'autre pour fonction de renforcer la liaison entre le longeronnet 2 et le panneau arrière 3.

La partie de la pièce unique 4 ayant pour fonction de renfort de la liaison entre le longeronnet 2 et le panneau arrière 3 a la forme d'une équerre 5.

En outre, la pièce unique 4 a, comme montré par la figure 2, une section transversale en forme de U.

Les deux ailes 5a, 5b du U sont disposées sensiblement dans le plan des deux faces latérales 2b, 2c du longeronnet 2.

De plus, l'une 5a des deux ailes du U est plus haute que l'autre aile 5b pour constituer ladite partie 5 en forme d'équerre.

Dans l'exemple représenté, l'aile 5a comportant l'équerre 5 est l'aile la plus proche de l'un des côtés d'habitacle du véhicule.

Les bords arrières 5c et 5d de la pièce 5 sont soudés sur toute leur hauteur au panneau arrière 3 pour obtenir une liaison très rigide en torsion entre le longeronnet 2 et le panneau 3.

Par ailleurs, les deux ailes 5a, 5b du U de la pièce 4 sont verticales et le fond 6 du U porte (voir figure 1) une tige 7 de suspension de l'échappement.

Les figures 1 à 3 montrent également que le bord avant 5e de l'aile du U qui est la plus haute est incliné vers le bas entre le panneau arrière 3 et le bord supérieur 2d du longeronnet 2.

De plus, chacune des deux ailes 5a, 5b du U formé par la pièce 4 comporte une nervure emboutie 7, 8 qui permet d'augmenter encore davantage la résistance aux efforts de la pièce 4.

Les figures 1 et 3 montrent en outre que l'ouverture supérieure de chaque longeronnet 2 et de chacune des deux pièces 4 est fermée par une plaque en tôle 9 commune au longeronnet 2 et à la pièce 4 et soudée à ceux-ci.

Par ailleurs, le bord arrière 5d de chacune des pièces 4 de section en U est recouvert par une platine ajourée 10 sur laquelle est fixée le panneau arrière 3.

A titre d'exemple, chacune des pièces 4 de section en U peut être en tôle d'acier d'épaisseur comprise entre 2 et 3 mm.

Chacun des longeronnets 2 peut être un longeronnet existant dont la destination première est d'équiper l'avant d'un véhicule automobile.

L'invention permet ainsi de faire l'économie de la conception et de la fabrication d'un longeronnet spécifique pour la structure arrière de la caisse.

Le principal avantage de l'invention réside dans le fait que la pièce 4 est une pièce unique présentant plusieurs fonctions pouvant être fabriquée simplement et à bas coût par découpage et pliage.

De plus, cette pièce respecte les préconisations d'assemblage lors du ferrage.

## Revendications

1. Structure de la partie arrière de la caisse d'un véhicule automobile comprenant un plancher de charge (1) fixé entre deux longeronnets en tôle (2) et un panneau arrière (3) s'étendant transversalement entre les deux extrémités arrières (2a) respectives des deux longeronnets (2), ce panneau arrière (3) étant distant de chacune des deux extrémités arrières (2a) des deux longeronnets (2), **caractérisée en ce que** l'intervalle existant entre chacun des deux longeronnets (2) et le panneau arrière (3) est comblé par une pièce unique (4) comportant deux parties dont l'une a pour fonction d'allonger le longeronnet (2) et l'autre pour fonction de renforcer la liaison entre le longeronnet (2) et le panneau arrière (3).

2. Structure selon la revendication 1, **caractérisée en ce que** la partie de ladite pièce unique (4) ayant pour fonction de renfort de la liaison entre le longeronnet (2) et le panneau arrière (3) a la forme d'une équerre (5).

3. Structure selon l'une des revendications 1 ou 2, **caractérisée en ce que** ladite pièce unique (4) a une section transversale en forme de U, les deux ailes (5a, 5b) du U étant disposées sensiblement dans le plan des deux faces latérales (2b, 2c) du longeronnet (2), l'une (5a) des deux ailes du U étant plus haute que l'autre aile pour constituer ladite partie en forme d'équerre (5).

4. Structure selon la revendication 3, **caractérisée en ce que** les deux ailes (5a, 5b) du U de ladite pièce (4) sont verticales et le fond (6) du U porte une tige (7) de suspension de l'échappement.

5. Structure selon l'une des revendications 3 ou 4, **caractérisée en ce que** le bord avant (5e) de l'aile du U qui est la plus haute est incliné vers le bas entre le panneau arrière (3) et le bord supérieur (2d) du longeronnet (2).

6. Structure selon l'une des revendications 3 à 5, **caractérisée en ce que** chacune des deux ailes (5a, 5b) du U formé par ladite pièce (4) comporte au moins une nervure emboutie (7, 8).

7. Structure selon l'une des revendications 1 à 6, **caractérisée en ce que** l'ouverture supérieure de chaque longeronnet (2) et de chacune des deux pièces (4) de section en U soudées à l'arrière d'un longeronnet (2) est fermée par une plaque en tôle (9) commune au longeronnet (2) et à ladite pièce (4) et soudée à ceux-ci.

8. Structure selon l'une des revendications 3 à 7, **caractérisée en ce que** le bord arrière (5d) de chacune desdites pièces (4) de section en U est recouvert par une platine ajourée (10) sur laquelle est fixée le panneau arrière (3).

9. Structure selon l'une des revendications 3 à 8, **caractérisée en ce que** chacune desdites pièces (4) de section en U est en tôle d'acier d'épaisseur comprise entre 2 et 3 mm.

10. Structure selon l'une des revendications 1 à 9, **caractérisée en ce que** chacun desdits longeronnets (2) est un longeronnet existant dont la destination première est d'équiper l'avant d'un véhicule automobile.

## Patentansprüche

1. Struktur des Hecks der Karosserie eines Kraftfahrzeugs, die eine Ladefläche (1) umfasst, die zwischen zwei Sparren (2) aus Blech und einer Heckplatte (3), die sich quer zwischen den jeweiligen zwei hinteren Enden (2a) der zwei Sparren (2) erstreckt, befestigt ist, wobei diese Heckplatte (3) von jedem der zwei hinteren Enden (2a) der zwei Sparren (2) beabstandet ist, **dadurch gekennzeichnet, dass** der Abstand, der zwischen jedem der zwei Sparren (2) und der Heckplatte (3) existiert, von einem einzigen Teil (4) gefüllt ist, das zwei Teile umfasst, von welchen einer zur Aufgabe hat, den Sparren (2) zu verlängern, und der andere zur Aufgabe hat, die Verbindung zwischen dem Sparren (2) und der Heckplatte (3) zu verstärken.

2. Struktur nach Anspruch 1, **dadurch gekennzeichnet, dass** der Teil des einzigen Teils (4), das zur Aufgabe die Verstärkung der Verbindung zwischen dem Sparren (2) und der Heckplatte (3) hat, die Form eines Winkels (5) hat.

3. Struktur nach einem der Ansprüche 1 oder 2, **dadurch gekennzeichnet, dass** das einzige Teil (4) einen Querschnitt in U-Form hat, wobei die zwei Schenkel (5a, 5b) des U im Wesentlichen in der Ebene der zwei Seitenflächen (2b, 2c) des Sparrens (2) angeordnet sind, wobei einer (5a) der zwei Schenkel des U höher ist als der andere Schenkel, um den Teil in Winkelform (5) zu bilden.

4. Struktur nach Anspruch 3, **dadurch gekennzeichnet, dass** die zwei Schenkel (5a, 5b) des U des Teils (4) vertikal sind, und dass der Grund (6) des U einen Aufhängungsschaft (7) des Auspuffs trägt.

5. Struktur nach einem der Ansprüche 3 oder 4, **dadurch gekennzeichnet, dass** der vordere Rand (5e) des Schenkels des U, der der höhere ist, zwischen der Heckplatte (3) und dem oberen Rand (2d) des Sparrens (2) nach unten geneigt ist.

6. Struktur nach einem der Ansprüche 3 bis 5, **dadurch gekennzeichnet, dass** jeder der zwei Schenkel (5a, 5b) des U, das von dem Teil (4) gebildet wird, mindestens eine gestanzte Rippe (7, 8) umfasst.

7. Struktur nach einem der Ansprüche 1 bis 6, **dadurch gekennzeichnet, dass** die obere Öffnung jedes Sparrens (2) jedes der zwei Teile (4) mit U-Querschnitt, die an die Rückseite eines Sparrens (2) geschweißt sind, von einer Platte (9) aus Blech, die dem Sparren (2) und dem Teil (4) gemeinsam ist und die an diese geschweißt ist, verschlossen ist.

8. Struktur nach einem der Ansprüche 3 bis 7, **dadurch gekennzeichnet, dass** der hintere Rand (5d) jedes der Teile (4) mit U-Querschnitt von einer durchbrochenen Platte (10), auf der die Heckplatte (3) befestigt ist, abgedeckt ist.

9. Struktur nach einem der Ansprüche 3 bis 8, **dadurch gekennzeichnet, dass** jedes der Teile (4) mit U-Querschnitt aus Stahlblech mit einer Stärke zwischen 2 und 3 mm besteht.

10. Struktur nach einem der Ansprüche 1 bis 9, **dadurch gekennzeichnet, dass** jeder der Sparren (2) ein existierender Sparren ist, dessen Hauptzweck darin besteht, die Vorderseite eines Kraftfahrzeugs auszustatten.

## Claims

1. A structure of the rear part of a motor vehicle body including a load floor (1) secured between two sheet metal spars (2) and a rear panel (3) extending transversely between the two respective rear ends (2a) of the two spars (2), said rear panel (3) being remote from each of the two rear ends (2a) of the two spars (2), **characterized in that** the gap existing between each of the two spars (2) and the rear panel (3) is filled by a single piece (4) comprising two parts, one of which has the function of extending the spar (2) and the other of which has the function of reinforcing the link between the spar (2) and the rear panel (3).

2. The structure according to claim 1, **characterized in that** the part of the said single piece (4) having the function of reinforcing the link between the spar (2) and the rear panel (3) has the form of an angle bracket (5).

3. The structure according to one of claims 1 or 2, **characterized in that** the single piece (4) has a U-shaped cross-section, the two wings (5a, 5b) of the U being disposed substantially in the plane of the two lateral faces (2b, 2c) of the spar (2), one (5a) of the two wings of the U being higher than the other wing to constitute said part having the form of an angle bracket (5).

4. The structure according to claim 3, **characterized in that** the two wings (5a, 5b) of the U of the said piece (4) are vertical, and the base (6) of the U carries a suspension rod (7) of the exhaust.

5. The structure according to one of claims 3 or 4, **characterized in that** the front edge (5e) of the wing of the U which is highest is inclined downwards between the rear panel (3) and the upper edge (2d) of the spar (2).

6. The structure according to one of claims 3 to 5, **characterized in that** each of the two wings (5a, 5b) of the U formed by said piece (4) comprises at least one stamped rib (7, 8).

7. The structure according to one of claims 1 to 6, **characterized in that** the upper opening of each spar (2) and of each of the two pieces (4) of U-shaped section welded to the rear of a spar (2) is closed by a sheet metal plate (9) common to the spar (2) and to said piece (4) and welded to these.

8. The structure according to one of claims 3 to 7, **characterized in that** the rear edge (5d) of each of said pieces (4) of U-shaped section is covered by an open-work sheet (10) on which the rear panel (3) is fixed.

9. The structure according to one of claims 3 to 8, **characterized in that** each of said pieces (4) of U-shaped section is made of sheet steel having a thickness comprised between 2 and 3 mm.

10. The structure according to one of claims 1 to 9, **characterized in that** each of said spars (2) is an existing spar, the prime destination of which is to equip the front of a motor vehicle.
